# EUROPÄISCHE PATENTSCHRIFT

(11) **EP 0 983 535 B1**
(45) Veröffentlichungstag und Bekanntmachung des Hinweises auf die Patenterteilung: **25.09.2002**
(21) Anmeldenummer: 98925593.0
(22) Anmeldetag: 13.05.1998
(51) Int. Cl.: G05B 19/042

(54) **VERFAHREN UND EINRICHTUNG ZUM ERZEUGEN UND AUSGEBEN EINER SEKUNDÄRNACHRICHT IN ABHÄNGIGKEIT VON EINER SELEKTIV ERFASSTEN PRIMÄRNACHRICHT**
METHOD AND DEVICE FOR GENERATING AND EMITTING A SECONDARY MESSAGE IN DEPENDENCE ON A SELECTIVELY CAPTURED PRIMARY MESSAGE
PROCEDE ET DISPOSITIF POUR LA GENERATION ET L'EMISSION D'UN MESSAGE SECONDAIRE EN FONCTION D'UN MESSAGE PRIMAIRE ENREGISTRE SELECTIVEMENT

(30) Priorität: 16.05.1997 DE 19720517
(43) Veröffentlichungstag der Anmeldung: 08.03.2000
(73) Patentinhaber: GERT FISCHER GmbH, 41564 Kaarst (DE)
(72) Erfinder: FISCHER, Gert, D-41564 Kaarst (DE)
(74) Vertreter: Schmidt, Frank-Michael, Dr.-Ing.
(86) Internationale Anmeldenummer: EP9802807
(87) Internationale Veröffentlichungsnummer: WO98053375

(56) Entgegenhaltungen:
- EP-A- 0 449 458
- WO-A-92/22047
- WO-A-94/28635
- WO-A-96/12993
- DE-A- 19 522 937
- GB-A- 2 229 022

## Beschreibung

Die Erfindung betrifft ein Verfahren zum Erzeugen und Übermitteln wenigstens einer ein Ereignis anzeigenden Sekundärnachricht. Ferner betrifft die Erfindung eine Konvertiereinrichtung zum Empfangen eines von einer Standard-Schnittstelle ausgegebenen Ausgabesignalstroms, zum selektiven Erfassen einer im Ausgabesignalstrom enthaltenen, ein Ereignis anzeigenden Primärnachricht und zum Erzeugen und Ausgeben einer das Ereignis anzeigenden Sekundärnachricht auf ein Übertragungsmedium.

Datenverarbeitungseinrichtungen werden in großem Umfang zum Steuern und Überwachen von Einrichtungen, Anlagen und automatisiert ablaufenden Verfahren eingesetzt. Üblicherweise werden die zur Steuerung und Überwachung erforderlichen Informationen einerseits von einem Nutzer eingegeben, andererseits mit Hilfe von Sensoreinrichtungen an den zu steuernden und zu überwachenden Einrichtungen und Anlagen gewonnen. Die Informationen werden von einem Computerprogramm verarbeitet und die Ergebnisse der Verarbeitung entweder über eine Ausgabeeinrichtung angezeigt und ausgedruckt oder sie beeinflussen die zu steuernde und zu überwachende Einrichtung oder Anlage mit Hilfe von Stellgliedern (Aktoren). In Abhängigkeit von den auf einer Anzeigeeinrichtung angezeigten oder über einen Druck ausgegebenen Daten oder den von Signalgebern ausgegebenen Signalen kann ein Bediener auf die Einrichtung oder die Anlage einwirken.

Oftmals laufen die Steuerung und die Überwachung zum großen Teil automatisiert ab; nur bei bestimmten Ereignissen, beispielsweise Gefahrenzuständen oder Funktionsausfällen, muß ein Bediener in Abhängigkeit von ihm übermittelten Nachrichten, beispielsweise Gefahrenanzeigen, eingreifen. Bei anderen Anlagen wiederum ist ein regelmäßiges Prüfen von auf einem Protokolldrucker ausgegebenen Informationen erforderlich, um ggfs. eine Reparatur oder Wartung der Anlage vorzunehmen. Bei vielen dieser Anlagen wäre es wünschenswert, wenn das regelmäßige Lesen der Ausgaben der Anzeigeeinrichtung oder der Ausdrucke des Protokolldruckers durch die Bediener oder das Wartungspersonal auf die Fälle beschränkt werden könnte, in denen tatsächlich ein Eingriff (Bedienereingriff oder Wartung) erforderlich ist. Dazu wäre eine Fernübertragung der angezeigten oder ausgedruckten Meldungen oder Primärnachrichten wünschenswert, damit das Bedien- oder Wartungspersonal an einem entfernten Ort informiert werden kann. Dies hätte den Vorteil, daß eine zentrale Überwachung mehrerer Einrichtungen und Anlagen mit entsprechend verringertem Personalaufwand vorgesehen werden könnte.

Seit einiger Zeit gibt es Datenverarbeitungseinrichtungen, die mit einer Einrichtung zur Fernübertragung von Nachrichten ausgestattet sind und die bei bestimmten Ereignissen eine entsprechende Nachricht über ein Nachrichtenübertragungsmedium, beispielsweise über das Telefonnetz, übertragen. Diese Datenverarbeitungseinrichtungen, beispielsweise Mikrocomputer, sind z.B. mit einem Modem oder einer ISDN-Karte ausgestattet. In der Regel kommuniziert die rechnereigene ISDN-Karte bzw. das Modem über einen rechnereigenen Bus mit den anderen Baugruppen des Mikrocomputers, wie beispielsweise dem Mikroprozessor oder dem Hauptspeicher. Darüber hinaus kann der Mikrocomputer Schnittstellen zu Sensoren oder Aktoren aufweisen. Eine spezielle Software, die mit Hilfe des Mikroprozessors abgearbeitet wird, steuert neben den herkömmlichen Datenverarbeitungsfunktionen auch die Erfassung und Speicherung von Meßwerten der Sensoren, die Ansteuerung der Aktoren und die Ausgabe von Nachrichten über das Modem bzw. die ISDN-Karte. Bei Erfassung bestimmter Zustände oder Ereignisse wird eine Nachricht generiert und mit Hilfe des Modem bzw. der ISDN-Karte über das öffentliche Telefonnetz an einen Empfänger übertragen. Beispielsweise kann eine solche Nachrichtenübertragung mit Hilfe des Kurzmitteilungsdienstes SMS (Short Message Service) des D2-Mobilfunknetzes erfolgen. Die von der Datenverarbeitungseinrichtung erzeugte Kurznachricht oder Kurzmitteilung wird dann auf einem Mobilfunktelefon (z.B. des Wartungsdienstes) angezeigt. Dies ist beispielsweise beschrieben in "Mobil Office - Mannesmann Mobilfunk Infoletter für Telekommunikation", März 1997, Seiten 6 und 7.

Nachteilig bei diesen bekannten die Sensorerfassung und Nachrichtenerzeugung integrierenden Lösungen ist, daß diese nicht in bestehende ältere Anlagen oder Einrichtungen einfügbar oder nachträglich an ältere Anlagen ankoppelbar sind, da diese Anlagen nicht über die erforderlichen speziellen Schnittstellen verfügen. Darüber hinaus sind diese auf eine spezielle Problematik und Hardware zugeschnittenen Lösungen unflexibel; eine vorhandene Hardware zur Nachrichtenerzeugung läßt sich nicht oder nur schwer auf eine andere Datenverarbeitungseinrichtung umsetzen.

Es ist daher eine Aufgabe der Erfindung, eine flexible Möglichkeit der Fernübermittlung von bestimmte Ereignisse anzeigenden Nachrichten zu schaffen, die eine Nachrüstung vorhandener, mit Standard-Schnittstellen ausgerüsteter Datenverarbeitungseinrichtungen gestattet.

Diese Aufgabe wird erfindungsgemäß durch ein Verfahren zum Erzeugen und Übermitteln wenigstens einer ein Ereignis anzeigenden Sekundärnachricht mit den Merkmalen des Patentanspruchs 1 bzw. eine Konvertiereinrichtung zum Empfangen eines von einer Standard-Schnittstelle ausgegebenen Ausgabesignalstroms, zum selektiven Erfassen einer im Ausgabesignalstrom enthaltenen, ein Ereignis anzeigenden Primärnachricht und zum Erzeugen und Ausgeben einer das Ereignis anzeigenden Sekundärnachricht auf ein Übertragungsmedium mit den Merkmalen des Patentanspruchs 17 gelöst.

Bei dem erfindungsgemäßen Verfahren wird eine ein Ereignis anzeigende Sekundärnachricht am Ort der zu überwachenden Einrichtung oder Anlage oder des zu überwachenden Verfahrens erzeugt und über ein Übertragungsmedium zu einer entfernten Empfangseinrichtung übertragen. An einer vorhandenen Datenverarbeitungseinrichtung wird ein Ausgabesignalstrom, der wenigstens eine das Ereignis anzeigende Primärnachricht enthält, an einer von außen zugänglichen Standard-Schnittstelle ausgegeben, wobei eine Standard-Ausgabeeinrichtung zur Ausgabe der wenigstens einen Primärnachricht an die Standard-Schnittstelle angekoppelt werden kann. Die Standard-Ausgabeeinrichtung ist beispielsweise ein Protokolldrucker. Unter einer Datenverarbeitungseinrichtung soll hier jede Einrichtung verstanden werden, die irgendwelche Ereignisse erfassen und so verarbeiten kann, daß entsprechende Signale ausgegeben werden. Dazu gehören sowohl Computer als auch Prozeßsteuereinrichtungen und Meldesignalanlagen. Bei dem erfindungsgemäßen Verfahren wird zunächst eine Konvertiereinrichtung zum Empfangen des Ausgabesignalstroms, zum selektiven Erfassen der wenigstens einen Primärnachricht und zum Erzeugen und Ausgeben der wenigstens einen Sekundärnachricht auf das Übertragungsmedium konfiguriert, indem die Konvertiereinrichtung in einen Konfigurationsmodus gebracht wird und dann an die Konvertiereinrichtung Konfigurationsdaten übermittelt werden, die die zu erfassende Primärnachricht, die zu erzeugende und auszugebende Sekundärnachricht und Parameter der Ausgabe der Sekundärnachricht auf das Übertragungsmedium spezifizieren. Den Konfigurationsdaten entsprechende Konfigurationszustände werden in der Konvertiereinrichtung gespeichert. Konfigurationszustände sind somit die den Konfigurationsdaten entsprechenden Zustände der Speicherbauelemente.

Nach der Konfiguration wird die Konvertiereinrichtung an die Standard-Schnittstelle der vorhandenen Datenverarbeitungseinrichtung angekoppelt und in einen Betriebsmodus gebracht. Im Betriebsmodus wird von der Konvertiereinrichtung der Ausgabesignalstrom empfangen. In einer von den Konfigurationszuständen vorgegebenen Weise wird die Primärnachricht selektiv erfaßt, die Sekundärnachricht in Abhängigkeit von der Primärnachricht erzeugt und auf das Übertragungsmedium ausgegegben. Anschließend wird die Sekundärnachricht von einer mit dem Übertragungsmedium gekoppelten Empfangseinrichtung empfangen.

Das erfindungsgemäße Verfahren hat den Vorteil, daß es sich bei einer Vielzahl unterschiedlicher Überwachungseinrichtungen anwenden läßt, bei denen eine Datenverarbeitungseinrichtung über eine von außen zugängliche Standard-Schnittstelle mit einer Standard-Ausgabeeinrichtung gekoppelt ist. Es ist keinerlei Eingriff in die vorhandene Überwachungseinrichtung erforderlich. Außerdem ist das Verfahren auch dann weiterhin anwendbar, wenn die Art der Ausgabe der Primärnachricht, die Art der Ausgabeeinrichtung oder auch die gesamte Überwachungsanlage ausgetauscht oder geändert werden. Dann ist nur eine erneute Konfiguration der Konvertiereinrichtung erforderlich.

Bei einem Ausführungsbeispiel der Erfindung wird die Konfiguration der Konvertiereinrichtung über die Standard-Schnittstelle der vorhandenen Datenverarbeitungseinrichtung realisiert. Dies kann beispielsweise durch Abarbeiten eines Konfigurationsprogramms auf der Datenverarbeitungseinrichtung geschehen. Dabei werden spezielle Konfigurationsdaten an die Konvertiereinrichtung übermittelt.

Andererseits kann die Konfiguration über die Standard-Schnittstelle auch ohne eine spezielle Konfigurationssoftware vorgenommen werden. Beispielsweise kann die Datenverarbeitungseinrichtung mit Hilfe der dort vorhandenen Software dazu gebracht werden, eine bestimmte Primärnachricht zu erzeugen und an ihrer Standard-Schnittstelle auszugeben, bei der die Konvertiereinrichtung eine bestimmte Sekundärnachricht erzeugen soll. Die Konvertiereinrichtung empfängt die spezielle Primärnachricht im Konfigurationsmodus. Der Bediener gibt anschließend die zu erzeugende Sekundärnachricht in die Konvertiereinrichtung ein (beispielsweise über ein Tastenfeld) und stellt die Parameter der Ausgabe der Sekundärnachricht an der Konvertiereinrichtung ein. Anschließend kann dieser Konfigurationsprozeß für eine zweite zu überwachende Primärnachricht wiederholt werden. Die letztgenannte Form der Konfiguration erfordert keinerlei spezielle Software für die vorhandene Datenverarbeitungseinrichtung, da die Konfiguration im wesentlichen durch die Hardware und Software der Konvertiereinrichtung vorgenommen wird.

Bei einer anderen Ausführungsform des erfindungsgemäßen Verfahrens wird die Konvertiereinrichtung zum Konfigurieren mit einer (zusätzlichen) Konfigurier-Datenverarbeitungseinrichtung gekoppelt und die Konfigurationsdaten werden über eine Eingabeschnittstelle der Konvertiereinrichtung übermittelt. Das Vorsehen einer speziellen Konfigurier-Datenverarbeitungseinrichtung, beispielsweise eines Laptop-Computers, gestattet eine preiswerte Konvertiereinrichtung, da ein großer Teil der zum Konfigurieren erforderlichen Intelligenz (Software) und Hardware in die mehrfach verwendbare Konfigurier-Datenverarbeitungseinrichtung übernommen wird. Mit Hilfe der Konfigurier-Datenverarbeitungseinrichtung lassen sich darüber hinaus eine Vielzahl unterschiedlicher Konvertiereinrichtungen konfigurieren.

Die Eingabeschnittstelle, über welche die Konfigurier-Datenverarbeitungseinrichtung mit der Konvertiereinrichtung gekoppelt wird, kann dabei diejenige Eingabeschnittstelle der Konvertiereinrichtung sein, die im Betriebsmodus an die Standard-Schnittstelle der vorhandenen Datenverarbeitungseinrichtung angekoppelt wird. Es kann allerdings auch eine weitere, spezielle Eingabeschnittstelle zum Konfigurieren vorgesehen sein.

Eine vorteilhafte Ausführungsform der eine spezielle Konfigurier-Datenverarbeitungseinrichtung verwendenden Verfahrensvariante ist dadurch gekennzeichnet, daß beim Konfigurieren auf der Konfigurier-Datenverarbeitungseinrichtung ein Konfigurierprogramm abgearbeitet wird, von dem ein Benutzer mittels einer Anzeigeeinrichtung der Konfigurier-Datenverarbeitungseinrichtung im Dialogbetrieb zur Eingabe und/oder Auswahl der zu erfassenden Primärnachrichten, der zu erzeugenden Sekundärnachrichten und der Parameter der Ausgabe der Sekundärnachrichten aufgefordert wird. Auf der Anzeigeeinrichtung, beispielsweise einem Display eines Laptop-Computers, erscheint eine Maske, in welche der Bediener mittels der Tastatur die Art der Standard-Schnittstelle eingibt oder diese aus einem Pull-Down-Menü auswählt, ferner die zu erfassenden Primärnachrichten, die jeweils zu erzeugenden Sekundärnachrichten und die Parameter der Ausgabe der Sekundärnachrichten, wie beispielsweise die Art der Ausgabeschnittstelle oder die anzuwählende Telefonnummer.

Bei einer vorteilhaften Weiterbildung des erfindungsgemäßen Verfahrens wird im Betriebsmodus eine Standard-Ausgabeschnittstelle an der Konvertiereinrichtung gebildet, an die die Standard-Ausgabeeinrichtung zur Ausgabe der Primärnachricht angekoppelt werden kann. Dies hat den Vorteil, daß keine speziellen Kabel oder Koppelstücke verwendet werden müssen. Der Stecker des Verbindungskabels zwischen der Standard-Ausgabeeinrichtung und der Standard-Schnittstelle der Datenverarbeitungseinrichtung wird aus der Standard-Schnittstelle herausgezogen. An seine Stelle wird der Stecker der Konvertiereinrichtung eingesteckt. Anschließend wird der Stecker der Standard-Ausgabeeinrichtung an die entsprechende Standard-Ausgabeschnittstelle der Konvertiereinrichtung angesteckt.

Die universelle Einsetzbarkeit des erfindungsgemäßen Verfahrens kann dadurch erhöht werden, daß beim Konfigurieren der Konvertiereinrichtung auch solche Konfigurationsdaten an die Konvertiereinrichtung übermittelt werden, die die Standard-Schnittstelle der Datenverarbeitungseinrichtung spezifizieren. Dabei wird eine Konvertiereinrichtung verwendet, die für eine Reihe verschiedener Standard-Schnittstellen konfiguriert werden kann.

Die Standard-Schnittstelle kann eine Druckerschnittstelle sein, über welche der Ausgabesignalstrom in Form eines Zeichenstroms in einem Standard-Ausgabeformat ausgegeben wird, wobei die wenigstens eine Primärnachricht eine Zeichenkette in dem Standard-Ausgabeformat ist. Beispielsweise kann die Konvertiereinrichtung für eine parallele Centronics-Schnittstelle oder eine serielle RS-232-Schnittstelle konfiguriert werden, wobei der Ausgabesignalstrom in einem ASCII-Code ausgegeben werden kann.

Es gibt eine Reihe von Möglichkeiten der Zuordnung der zu erzeugenden Sekundärnachricht zu der zu erfassenden Primärnachricht. Bei einer vorteilhaften Weiterbildung der Erfindung wird die Primärnachricht als Index in eine in der Konvertiereinrichtung gespeicherte Nachschlagetabelle verwendet und die Sekundärnachricht sowie die ihr zugeordneten Parameter werden aus dem adressierten Eintrag der Nachschlagetabelle ausgelesen.

Ein besonders einfaches Ausführungsbeispiel des erfindungsgemäßen Verfahrens ist dadurch gekennzeichnet, daß die Sekundärnachricht durch einfaches Duplizieren der Primärnachricht erzeugt wird. Dies ist insbesondere dann möglich, wenn die Primärnachricht aus sich heraus verständlich ist und in einem Standard-Textformat vorliegt.

Bei einer vorteilhaften Weiterbildung des Verfahrens wird von der mit dem Übertragungsmedium gekoppelten Empfangseinrichtung nach Empfang der Sekundärnachricht eine den Empfang anzeigende Antwortnachricht auf das Übertragungsmedium ausgegeben und die Antwortnachricht von der Konvertiereinrichtung empfangen und ausgewertet. Anschließend kann von der Konvertiereinrichtung die Sekundärnachricht wiederholt ausgegeben werden, wenn innerhalb einer vorgegebenen Zeit keine Antwortnachricht empfangen wurde oder wenn die empfangene Antwortnachricht anzeigt, daß eine wiederholte Ausgabe der Sekundärnachricht von dem Empfangseinrichtung gefordert wird. Dies gestattet eine wiederholte Ausgabe der Sekundärnachricht, bis der Empfänger, beispielsweise der die Nachricht empfangende Wartungsdienst, den Empfang quittiert hat.

Andererseits kann beim Auswerten der empfangenen Antwortnachricht in Abhängigkeit vom Inhalt der Antwortnachricht die Konvertiereinrichtung umkonfiguriert werden, wobei die zu erfassende Primärnachricht, die zu erzeugende Sekundärnachricht und/oder die Parameter der Ausgabe der Sekundärnachricht geändert werden können. Dies gestattet es beispielsweise, daß dann, wenn die Antwortnachricht anzeigt, daß ein Empfang der Nachricht durch den Wartungsdienst nicht möglich ist, eine andere oder die gleiche Sekundärnachricht mit geänderten Parametern (beispielsweise mit einer anderen Telefonnummer) erneut ausgegeben wird.

Die erfindungsgemäße Konvertiereinrichtung zum Empfangen eines von einer Standard-Schnittstelle ausgegebenen Ausgabesignalstroms, zum selektiven Erfassen einer im Ausgabesignalstrom enthaltenen, ein Ereignis anzeigenden Primärnachricht und zum Erzeugen und Ausgeben einer das Ereignis anzeigenden Sekundärnachricht auf ein Übertragungsmedium weist eine Speichereinrichtung, eine Eingabeschnittstelle, eine Steuereinrichtung und eine Ausgabeschnittstelleneinrichtung auf.

Die Speichereinrichtung dient zum Speichern von Konfigurationszuständen, die die zu erfassende Primärnachricht, die zu erzeugende und auszugebende Sekundärnachricht und die Parameter der Ausgabe der Sekundärnachricht auf das Übertragungsmedium spezifizieren.

Die Eingabeschnittstelle dient einerseits zum Empfangen von Konfigurationsdaten in einem Konfigurationsmodus und andererseits zum Empfangen des Ausgabesignalstroms der Standard-Schnittstelle in einem Betriebsmodus.

Die Steuereinrichtung ist mit der Eingabeschnittstelle und der Speichereinrichtung gekoppelt und dient zum Umschalten zwischen dem Konfigurationsmodus und dem Betriebsmodus, zum Erzeugen der zu speichernden Konfigurationszustände aus den empfangenen Konfigurationsdaten im Konfigurationsmodus und zum selektiven Erfassen der Primärnachricht sowie zum Erzeugen der auszugebenden Sekundärnachricht in Abhängigkeit von der erfaßten Primärnachricht im Betriebsmodus.

Die Ausgabeschnittstelleneinrichtung ist mit der Steuereinrichtung und der Speichereinrichtung gekoppelt und an ein Übertragungsmedium ankoppelbar und dient zum Empfangen der Sekundärnachricht von der Steuereinrichtung und zum Ausgeben der Sekundärnachricht in einer von den die Parameter der Ausgabe spezifizierenden Konfigurationszuständen vorgegebenen Weise auf das Übertragungsmedium.

Aufgrund ihrer Konfigurierbarkeit ist die Konvertiereinrichtung universell und flexibel einsetzbar. Sie stellt eine preiswerte Variante zum Nachrüsten vorhandener Überwachungs-Datenverarbeitungseinrichtungen mit Standard-Ausgabeschnittstellen dar.

Die Speichereinrichtung kann sowohl flüchtige (RAM) als auch nicht-flüchtige Speicherbauelemente enthalten, was von der Aufrechterhaltung der Stromversorgung für diese Bauelemente beim Übergang vom Konfigurationsmodus in den Betriebsmodus abhängig ist. Die Steuereinrichtung kann einen Mikroprozessor umfassen, der ein in der Speichereinrichtung abgelegtes Programm abarbeitet. Die Umschaltung zwischen dem Konfigurationsmodus und dem Betriebsmodus kann durch eine in der Konvertiereinrichtung angeordnete Umschalteinrichtung, beispielsweise einen Schalter, oder über eine Eingabe über die Eingabeschnittstelle erfolgen. Die Steuereinrichtung ist mit der Eingabeschnittstelle gekoppelt. Zum selektiven Erfassen der Primärnachricht im empfangenen Ausgabesignalstrom kann beispielsweise jeweils ein Abschnitt des Ausgabesignalstroms in einen Zwischenspeicher abgelegt bzw. seriell durch diesen hindurchgetaktet werden. Die seriell angeordneten Speicherzellen des Zwischenspeichers können parallel mit einer Vergleichseinrichtung, beispielsweise der eines Assoziativspeichers gekoppelt sein. Die jeweils anderen Eingänge der Vergleichseinrichtung sind mit dem Teil der Speichereinrichtung gekoppelt, dessen Konfigurationszustände die zu erfassende Primärnachricht spezifizieren. Stellt die Vergleichseinrichtung eine Übereinstimmung fest, d.h. wird die spezifizierte Primärnachricht im Ausgabesignalstrom erkannt, so wird die auszugebende Sekundärnachricht erzeugt. Dies kann im einfachsten Fall durch einfaches Kopieren der Primärnachricht geschehen. Bei einem anderen Ausführungsbeispiel kann die Sekundärnachricht in einem von der Primärnachricht adressierten Assoziativspeichereintrag abgelegt sein. Eine weitere Möglichkeit ist das Erzeugen eines Zeigers, der auf den Speicherplatz der Speichereinrichtung weist, in dem die auszugebende Sekundärnachricht gespeichert ist.

Bei einem Ausführungsbeispiel der Konvertiereinrichtung weist die Eingabeschnittstelle eine erste Eingabeschnittstelle zum Empfangen der Konfigurationsdaten und eine zweite Eingabeschnittstelle zum Empfangen des Ausgabesignalstroms auf. Diese Ausführungsform bietet die Möglichkeit der Ankopplung einer separaten Konfigurier-Datenverarbeitungseinrichtung an die erste Eingabeschnittstelle, die speziell an den Empfang der Konfigurationsdaten von der Konfigurier-Datenverarbeitungseinrichtung (beispielsweise einem Laptop) angepaßt ist. Die zweite Eingabeschnittstelle zum Empfangen des Ausgabesignalstroms ist dann als Standard-Schnittstelle zur Ankopplung an die vorhandene Datenverarbeitungseinrichtung ausgeführt. Es können auch mehrere zweite Eingabeschnittstellen, beispielsweise eine parallele Centronics-Schnittstelle und zusätzlich eine serielle RS-232-Schnittstelle vorgesehen sein, wobei jeweils eine der Schnittstellen in Abhängigkeit von der Konfiguration der Konvertiereinrichtung aktiviert ist.

Bei einer vorteilhaften Weiterbildung weist die Konvertiereinrichtung eine mit der Eingabeschnittstelle gekoppelte Standard-Ausgabeschnittstelle auf, die im Betriebsmodus den von der Eingabeschnittstelle empfangenen Ausgabesignalstrom wieder ausgibt. Dies gestattet eine einfache Ankopplung der Konvertiereinrichtung durch einfaches Einkoppeln der Konvertiereinrichtung zwischen die Standard-Schnittstelle der vorhandenen Datenverarbeitungseinrichtung und die Standard-Ausgabeeinrichtung, die an die Standard-Ausgabeschnittstelle der Konvertiereinrichtung angekoppelt wird.

Die Flexibilität der Konvertiereinrichtung kann dadurch erhöht werden, daß die Konfigurationszustände außerdem die Art der Standard-Schnittstelle und Parameter des Empfangs der Primärnachricht spezifizieren. Die Konvertiereinrichtung kann für eine Reihe von Schnittstellen konfiguriert und auch später wieder umkonfiguriert werden. Die Parameter des Empfangs der Primärnachricht legen beispielsweise fest, wann und wie oft die Primärnachricht im Ausgabesignalstrom enthalten sein muß, welche anderen Signale oder Nachrichten der Primärnachricht vorausgehen sollen oder bei welchen vorausgehenden Signalen oder Nachrichten das Erfassen der Primärnachricht unterbleiben soll.

Bei einem Ausführungsbeispiel der Konvertiereinrichtung sind die in der Speichereinrichtung gespeicherten Konfigurationszustände, d.h. die Zustände der einzelnen Speicherbauelemente, die in einem Standard-Datenformat gespeicherten Konfigurationsdaten. In diesem Falle werden beim Konfigurieren die von der Eingabeschnittstelle empfangenen Konfigurationsdaten einfach in der Speichereinrichtung abgelegt. Im Betriebsmodus liest die Steuereinrichtung programmgesteuert die gespeicherten Konfigurationsdaten und steuert dementsprechend die Erzeugung und Ausgabe der Sekundärnachricht.

Bei einem alternativen Ausführungsbeispiel können die Konfigurationszustände auch Zustände von Multiplexern und logischen Gatterschaltungen sein, und somit direkt die selektive Erfassung der Primärnachricht und die Parameter der Ausgabe der Sekundärnachricht beeinflussen. Bei dieser Variante ist die zum Betrieb der Konvertiereinrichtung erforderliche Software minimiert.

Die verschiedenen zu erzeugenden Sekundärnachrichten können den verschiedenen zu erfassenden Primärnachrichten in Form einer in der Speichereinrichtung abgelegten Nachschlagetabelle zugeordnet sein. Beispielsweise kann ein Eintrag der Nachschlagetabelle mit Hilfe einer dekodierten Primärnachricht adressiert werden, woraufhin aus der Nachschlagetabelle die Sekundärnachricht und/oder die Parameter der Ausgabe von der Steuereinrichtung ausgelesen und entsprechend verarbeitet werden.

Die Ausgabeschnittstelleneinrichtung kann ein an ein Telefonnetz ankoppelbares Modem oder eine ISDN-Karte aufweisen. In diesem Falle umfassen die Parameter der Ausgabe der Sekundärnachricht das Wahlverfahren und die anzuwählende Nummer der Empfangseinrichtung. Bei einem alternativen Ausführungsbeispiel kann die Ausgabeschnittstelleneinrichtung eine Funksendeeinrichtung zur drahtlosen Nachrichtenübertragung aufweisen.

Vorteilhafte Weiterbildungen der Erfindung sind in den Unteransprüchen gekennzeichnet.

Im folgenden wird die Erfindung anhand von in der Zeichnung dargestellten Ausführungsbeispielen näher erläutert. In der Zeichnung zeigen:
- Fig. 1: ein Blockschaltbild mit der erfindungsgemäßen Konvertiereinrichtung zur Ausführung des erfindungsgemäßen Verfahrens; und
- Fig. 2: ein Ausführungsbeispiel, das der Temperaturüberwachung dient.

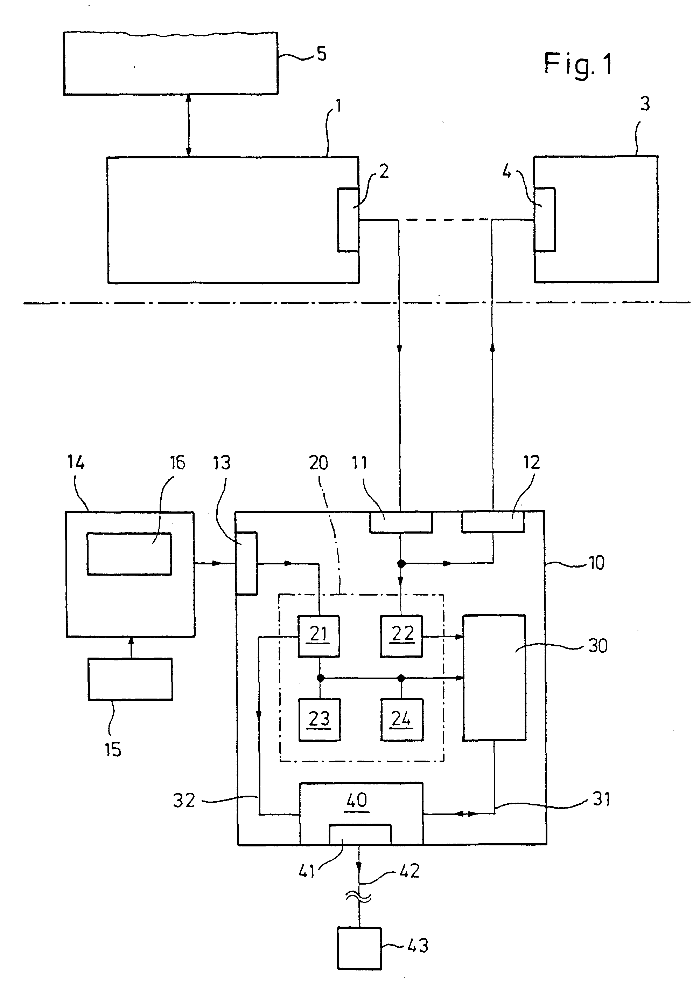

Im folgenden wird auf Fig. 1 bezug genommen. Eine vorhandene Datenverarbeitungseinrichtung 1, beispielsweise als Teil einer Steuer- und Regeleinrichtung, weist eine Standard-Ausgabeschnittstelle 2 auf. An die Ausgabeschnittstelle 2, beispielsweise eine parallele Centronics-Schnittstelle, ist eine Standard-Ausgabeeinrichtung 3 anschließbar. Die Ausgabeeinrichtung 3 weist eine mit der Schnittstelle 2 kompatible Eingabeschnittstelle 4 auf. Die Schnittstellen 2 und 4 können über ein Standard-Schnittstellenkabel miteinander gekoppelt werden (in der Zeichnung als Strichlinie dargestellt). Die Standard-Ausgabeeinrichtung kann beispielsweise ein Protokolldrucker sein, der die von der Datenverarbeitungseinrichtung 1 ausgegebenen Protokolldaten ausdruckt. Diese können beispielsweise Meßwerte oder Zustandsmeldungen einer mit Hilfe der Datenverarbeitungseinrichtung 1 überwachten Anlage 5 sein.

Die von der Datenverarbeitungseinrichtung 1 an die Ausgabeeinrichtung 3 über die Schnittstellen 2 und 4 ausgegebene Signalfolge wird als Ausgabesignalstrom bezeichnet. Sobald die Datenverarbeitungseinrichtung den Eintritt eines bestimmten Ereignisses, beispielsweise das Messen einer bestimmten Temperatur oder eines bestimmten Druckes, feststellt, kann sie über die Schnittstellen 2 und 4 an die Ausgabeeinrichtung 3 eine Primärnachricht ausgeben. Die Primärnachricht wird von der Ausgabeeinrichtung angezeigt oder ausgedruckt. Der Ausgabesignalstrom weist ein Standardformat auf, wobei die Primärnachricht eine vorgegebene Folge von Signalen in diesem Standardformat ist. Der Ausgabesignalstrom kann eine Zeichenfolge in einem ASCII-Code sein, wobei die Primärnachricht eine vorgegebene Zeichenkette, beispielsweise die Zeichenkette "Temperaturüberschreitung" ist.

An die Ausgabeschnittstelle 2 wird eine Konvertiereinrichtung 10 mit einer Eingabeschnittstelle 11 angekoppelt. Die Eingabeschnittstelle 11 empfängt den Ausgabesignalstrom der Schnittstelle 2 und leitet diesen zunächst an eine Ausgabeschnittstelle 12 der Konvertiereinrichtung 10 weiter. An diese Ausgabeschnittstelle 12 ist die Schnittstelle 4 der Ausgabeeinrichtung 3 ankoppelbar.

Die Konvertiereinrichtung 10 hat die Funktion, die das Ereignis anzeigende Primärnachricht in dem Ausgabesignalstrom der Schnittstelle 2 selektiv zu erfassen und eine das Ereignis anzeigende Sekundärnachricht zu erzeugen und auf ein Übertragungsmedium auszugeben. Im einfachsten Fall ist die Sekundärnachricht eine Kopie der Primärnachricht, die ggfs. durch weitere Zeichen ergänzt und beispielsweise in einem anderen Signal- oder Zeichenformat ausgegeben wird. Durch die Konversion einer Primärnachricht in eine Sekundärnachricht ist es aber zusätzlich möglich, Erläuterungen in die Sekundärnachricht einzubinden oder auch die Sprache der Nachricht zu wechseln.

Damit der Konvertiereinrichtung 10 diese Aufgaben erfüllen kann, ist eine Konfiguration der Konvertiereinrichtung erforderlich. Bei dem in Fig. 1 dargestellten Ausführungsbeispiel wird die Konvertiereinrichtung 10 über ihre Konfigurierschnittstelle 13 mit einem Computer 14 gekoppelt. Der Computer 14 weist unter anderem ein Display 16 und eine Eingabetastatur 15 auf. Auf dem Computer 14 wird ein Konfigurierprogramm für die Konvertiereinrichtung 10 abgearbeitet. Im Dialogbetrieb wird der Bediener des Computers 14 aufgefordert, Angaben über die Art der Standard-Schnittstelle 2, das Format des Ausgabesignalstroms und die im Ausgabesignalstrom zu erfassende Primärnachricht zu machen. Dabei wird die zu suchende Primärnachricht in einem Textformat eingegeben, wobei auch die Eingabe sogenannter Wildcards möglich ist, d.h. vorgegebener Sonderzeichen, die ein beliebiges Zeichen im Ausgabesignalstrom repräsentieren. Ferner sind Eingaben darüber möglich, ob die Konvertiereinrichtung 10 anstelle oder zusätzlich zu der Ausgabeeinrichtung 3 angekoppelt wird.

Außerdem gibt der Bediener in Zuordnung zu jeder Primärnachricht eine von der Konvertiereinrichtung auszugebende Sekundärnachricht ein. Diese Eingabe wird zweckmäßigerweise ebenfalls in einem Textformat vorgenommen. Zu jeder Sekundärnachricht werden Parameter der Ausgabe eingegeben. Die Parameter der Ausgabe definieren die Schnittstelle zwischen der Konvertiereinrichtung und dem Übertragungsmedium, die Art des Übertragungsmediums, die Adresse der Empfangseinrichtung und das Protokoll der Übertragung. Beispielsweise definieren die Parameter der Ausgabe eine bestimmte Telefonnummer der D2-Mobilfunknetzes, an die die Sekundärnachricht als Kurzmitteilung übermittelt werden soll. Darüber hinaus können weitere Parameter, wie eine Ersatz-Telefonnummer im Falle einer fehlenden Verbindung zur ersten Telefonnummer, der Zeitpunkt einer möglichen Wiederholung der Ausgabe der Sekundärnachricht oder Optionen, wie die Abfrage des Status der an das Übertragungsmedium angekoppelten Empfangseinrichtung, vom Bediener des Computers 14 über die Tastatur 15 eingegeben oder ausgewählt werden.

Die Konvertiereinrichtung weist eine Speichereinrichtung 20 auf. In einen Abschnitt der Speichereinrichung 20, den Konfigurationsspeicher 21, werden über die Konfigurierschnittstelle 13 Konfigurationsdaten eingeschrieben. Die Übermittlung und Speicherung der Konfigurationsdaten in den Konfigurationsspeicher 21 wird von dem auf dem Computer 14 ablaufenden Konfigurationsprogramm im Handshake-Verfahren mit der Steuer-Software der Konvertiereinrichtung 10 vorgenommen. Die Konfigurationsdaten werden als nicht-flüchtige Konfigurationszustände des Konfigurationsspeichers 21 gespeichert. Zum Abschluß des Konfigurierens der Konvertiereinrichtung 10 übermittelt der von der Konfigurationssoftware gesteuerte Computer 14 der Konvertiereinrichtung 10 ein Abschlußsignal, welches ein Umschalten der Konvertiereinrichtung 10 aus dem Konfigurationsmodus in den Betriebsmodus bewirkt.

Bei einem alternativen Ausführungsbeispiel kann das Umschalten zwischen Konfigurationsmodus und Betriebsmodus auch mit Hilfe einer Erfassung der Schnittstellenbelegung der Schnittstellen 11 und 13 erfolgen: Wenn der Computer 14 an die Schnittstelle 13 angekoppelt ist, schaltet die Konvertiereinrichtung 10 in den Konfigurationsmodus um, und wenn die Schnittstelle 13 frei und die Schnittstelle 11 an die Schnittstelle 2 angekoppelt ist, schaltet die Konvertiereinrichtung 10 in den Betriebsmodus um. Bei noch einem anderen Ausführungsbeispiel kann anstelle der beiden Schnittstellen 11 und 13 eine gemeinsame Schnittstelle vorgesehen sein, wobei die Konvertiereinrichtung 10 durch einen Schalter zwischen Konfigurations- und Betriebsmodus umgeschaltet wird.

Nachdem die Konvertiereinrichtung 10 in den Betriebsmodus umgeschaltet worden ist und die Schnittstelle 11 mit der Schnittstelle 2 gekoppelt wurde, empfängt die Schnittstelle 11 den Ausgabesignalstrom der Schnittstelle 2. Der Ausgabesignalstrom wird zunächst an die Ausgabeschnittstelle 12 weitergeleitet, an die die Ausgabeeinrichtung 3 über ihre Schnittstelle 4 ankoppelbar ist. Außerdem wird der Ausgabesignalstrom in einem FIFO-Speicher 22 zwischengespeichert. Dies erleichert die selektive Erfassung der Primärnachricht im Ausgabesignalstrom.

Eine Steuereinrichtung 30 ist sowohl mit dem FIFO-Speicher 22 als auch mit dem Konfigurationsspeicher 21 gekoppelt. Die Steuereinrichtung 30 liest aus dem Konfigurationsspeicher 21 die der zu erfassenden Primärnachricht entsprechenden Konfigurationszustände aus und vergleicht diese mit dem jeweiligen Inhalt eines vorgegebenen Abschnitts des den Ausgabesignalstrom zwischenspeichernden FIFO-Speichers 22. Bei Übereinstimmung der durch die Konfiguration vorgegebenen Primärnachricht mit dem Inhalt des vorgegebenen Abschnitts des FIFO-Speichers 22 erzeugt die Steuereinrichtung 30 ein Signal, das die Erfassung der Primärnachricht anzeigt.

Bei einem alternativen Ausführungsbeispiel, welches sich insbesondere für solche Anwendungen eignet, bei denen die Ausgabeeinrichtung 3 ein Seitendrucker ist, wird jeweils ein eine Seite repräsentierender Abschnitt des Ausgabesignalstroms in einem Seitenspeicher zwischengespeichert. Anschließend wird an von den Konfigurationsdaten vorgegebenen Stellen der gespeicherten Seite nach der zu erfassenden Primärnachricht gesucht. Wird die Primärnachricht an dem vorgegebenen Ort der Seite festgestellt, so wird ein entsprechendes Signal erzeugt. Zweckmäßigerweise hat der Seitenspeicher eine Größe, die die gleichzeitige Speicherung zumindest zweier Seiten des Ausgabesignalstroms gestattet. Dies erleichert die Suche der Primärnachricht auf der einen gespeicherten Seite, während bereits die nächste Seite des Ausgabesignalstroms in den anderen Speicherbereich geschrieben wird.

Die Speichereinrichtung 20 enthält außerdem einen dritten Speicher 23 zum Speichern der Steuerungssoftware der Konvertiereinrichtung 10. Der Speicher 23 ist ebenfalls ein nicht-flüchtiger Speicher, beispielsweise ein ROM. Beim Einschalten der Konvertiereinrichtung wird diese mit Hilfe der im Speicher 23 abgelegten Software initialisiert und in den Betriebsmodus versetzt. Schließlich enthält die Speichereinrichtung 20 noch einen Arbeitsspeicher 24, in welchem die Programme und Daten bei der Abarbeitung gespeichert werden. Der Speicher 24 ist in der Regel ein RAM.

Die Konvertiereinrichtung 10 weist eine Ausgabeschnittstelleneinrichtung 40 auf, die über eine Ausgabeschnittstelle 41 mit dem Übertragungsmedium 42 gekoppelt ist. Das Übertragungsmedium 42 ist vorzugsweise ein öffentliches Telefonnetz, wobei die Ausgabeschnittstelle 41 von einem Modem oder einer ISDN-Karte gebildet wird. Die Ausgabeschnittstelleneinrichtung 40 ist über erste Leitungen 31 mit der Steuereinrichtung 30 und über zweite Leitungen 32 mit dem Konfigurationsspeicher 21 gekoppelt. Wird von der Steuereinrichtung 30 durch Vergleich der im Konfigurationsspeicher 21 und im Speicher 22 gespeicherten Daten festgestellt, daß eine vorgegebene Primärnachricht im Ausgabesignalstrom enthalten war, so wird ein entsprechendes Signal über die Leitungen 31 an die Ausgabeschnittstelleneinrichtung 40 übermittelt. Die Ausgabeschnittstelleneinrichtung 40 liest dann über die zweiten Leitungen 32 die der Primärnachricht zugeordnete Sekundärnachricht sowie die Parameter der Ausgabe dieser Sekundärnachricht aus dem Konfigurationsspeicher 21 aus, aktiviert die Ausgabeschnittstelle 41, prüft die Verfügbarkeit des Übertragungsmediums 42, wählt eine an das Übertragungsmedium 42 angekoppelte Empfangseinrichtung 43 an und gibt die Sekundärnachricht auf das Übertragungsmedium 42 aus.

Um die Übertragungssicherheit zu erhöhen, kann die Ausgabeschnittstelleneinrichtung 40 die Übermittlung der Sekundärnachricht in einem Handshake-Betrieb mit der Empfangseinrichtung 43 vornehmen. Zu diesem Zweck ist die Ausgabeschnittstelle 41 als bidirektionale Schnittstelle ausgeführt, die auch Antwortsignale von der Empfangseinrichtung 43 empfangen und an die Ausgabeschnittstelleneinrichtung 40 übermitteln kann. Eine über das Übertragungsmedium 42 an die Konvertiereinrichtung 10 zurückübertragene Antwortnachricht der Empfangseinrichtung 43 kann beispielsweise den ordnungsgemäßen Empfang der Sekundärnachricht quittieren.

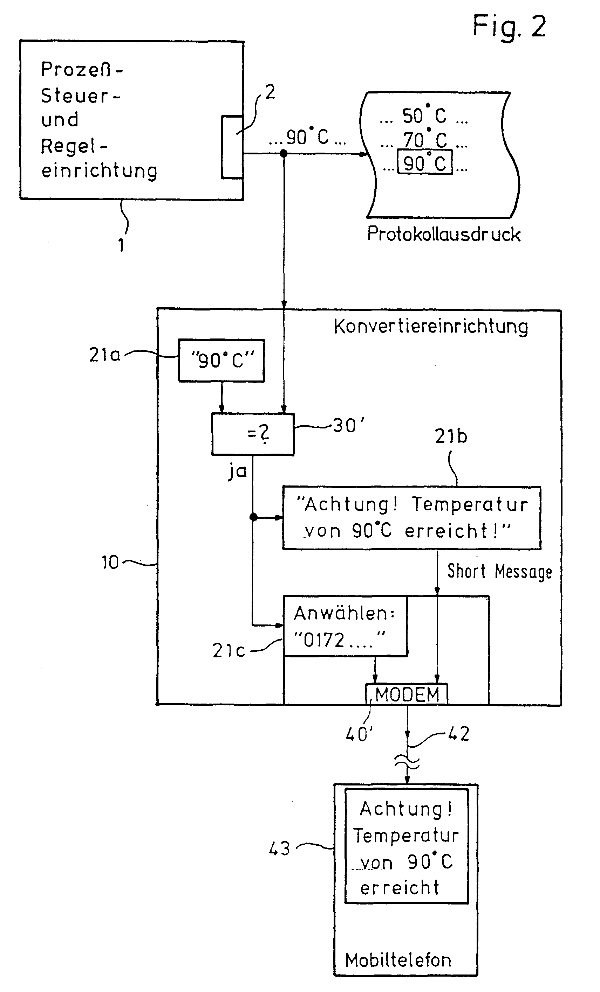

Fig. 2 zeigt am Beispiel einer Temperaturüberwachung, wie mit Hilfe der Konvertiereinrichtung die Sekundärnachricht erzeugt und an ein Mobiltelefon übermittelt wird. Bei diesem Beispiel gibt eine Prozeß-Steuer- und Regeleinrichtung 1 über eine Standard-Schnittstelle 2 die jeweils gemessene Temperatur in einem Standardzeichenformat an einen Protokolldrucker aus. Der Protokolldrucker druckt die Temperaturen in einer Endlosliste aus, wobei jeweils zeilenweise die zu überwachende Temperatur in regelmäßigen Zeitabständen ausgedruckt wird. Bei jeder vom Protokolldrucker ausgedruckten Zeile steht die Temperatur an derselben Position, wie es in Fig. 2 skizziert ist. Die übrigen ausgedruckten Zeichen und Angaben sind zur Vereinfachung nicht dargestellt.

Die Konvertiereinrichtung lauscht an der Verbindung zwischen der Schnittstelle 2 und dem Protokolldrucker mit und liest den übertragenen Ausgabesignalstrom ein. Die Konvertiereinrichtung 10 ist dabei so konfiguriert, daß sie die Zeichen im Ausgabesignalstrom erkennen kann. Darüber hinaus erkennt die Konvertiereinrichtung das jeweilige Ende einer Zeile des Protokollausdrucks und erfaßt die Position des jeweils ausgegebenen Zeichens in der Zeile. Durch Mitzählen der ausgegebenen Zeichen erfaßt die Konvertiereinrichtung die Position im Ausgabesignalstrom, an der die die jeweilige Temperatur angebenden Zeichen auftreten. Diese Zeichen werden aus dem Ausgabesignalstrom herausgefiltert. Eine Vergleichseinrichtung 30' vergleicht die herausgefilterten, die Temperatur anzeigenden Zeichen mit den in einem Speicher 21a abgelegten Zeichen, die die zu erfassende Primärnachricht repräsentieren. Bei dem in Fig. 2 dargestellten Fall soll als Primärnachricht die Ausgabe "90°C" erfaßt werden, die eine zu meldende Temperaturschwelle darstellt. Sobald die Vergleichseinrichtung 30' feststellt, daß die Zeichenfolge "90°C" am vorgegebenen Ort des Protokollausdrucks auftrat, so adressiert ein Signal einen der Primärnachricht zugeordneten Eintrag im Speicher 21b, der die Sekundärnachricht darstellt. In dem in Fig. 2 dargestellten Fall wird die Kurzmeldung "Achtung! Temperatur von 90°C erreicht!" adressiert. Außerdem adressiert ein weiteres Signal einen Eintrag im Speicher 21c, der die Parameter der Ausgabe der Sekundärnachricht beschreibt. In dem in Fig. 2 dargestellten Beispiel bestimmt der Eintrag des Speichers 21c, daß eine Telefonnummer des D2-Netzes ("0172....") über ein Modem angewählt werden soll. Die Telefonnummer und die zu übermittelnde Kurznachricht werden an das Modem 40' übertragen, welches über das angekoppelte Telefonnetz 42 ein Mobiltelefon 43 anwählt. Auf dem Display des Mobiltelefons 43 erscheint daraufhin die gewünschte Meldung.

## Patentansprüche

1. Verfahren zum Erzeugen und Übermitteln wenigstens einer ein Ereignis anzeigenden Sekundärnachricht, wobei
ein Ausgabesignalstrom, der wenigstens eine das Ereignis anzeigende und zur Ausgabe über eine Standard-Ausgabeeinrichtung (3) vorgesehene Primärnachricht enthält, an einer von außen zugänglichen Standard-Schnittstelle (2) einer Datenverarbeitungseinrichtung (1) ausgegeben wird, wobei die Standard-Ausgabeeinrichtung (3) zur Ausgabe der wenigstens einen Primärnachricht an die Standard-Schnittstelle (2) angekoppelt werden kann;
eine Konvertiereinrichtung (10) zum Empfangen des Ausgabesignalstroms, zum selektiven Erfassen der wenigstens einen Primärnachricht und zum Erzeugen und Ausgeben der wenigstens einen Sekundärnachricht auf ein Übertragungsmedium (42) konfiguriert wird, indem
die Konvertiereinrichtung (10) in einen Konfigurationsmodus gebracht wird,
an die Konvertiereinrichtung Konfigurationsdaten übermittelt werden, die die zu erfassende Primärnachricht, die zu erzeugende und auszugebende Sekundärnachricht und Parameter der Ausgabe der Sekundärnachricht auf das Übertragungsmedium (42) spezifizieren, und
den Konfigurationsdaten entsprechende Konfigurationszustände in der Konvertiereinrichtung (10) gespeichert werden;
die Konvertiereinrichtung (10) an die Standard-Schnittstelle (2) angekoppelt und in einen Betriebsmodus gebracht wird;
von der Konvertiereinrichtung (10) der Ausgabesignalstrom empfangen wird und in einer von den Konfigurationszuständen vorgegebenen Weise die wenigstens eine Primärnachricht selektiv erfaßt, in Abhängigkeit von der wenigstens einen Primärnachricht die wenigstens eine Sekundärnachricht erzeugt und die wenigstens eine Sekundärnachricht auf das Übertragungsmedium (42) ausgegeben wird; und
die wenigstens eine Sekundärnachricht von einer mit dem Übertragungsmedium gekoppelten Empfangseinrichtung (43) empfangen wird.

2. Verfahren nach Anspruch 1, **dadurch gekennzeichnet, daß** zum Konfigurieren die Konvertiereinrichtung (10) mit der Standard-Schnittstelle (2) gekoppelt wird und die Konfigurationsdaten von der Datenverarbeitungseinrichtung (1) übermittelt werden.

3. Verfahren nach Anspruch 1, **dadurch gekennzeichnet, daß** die Konvertiereinrichtung (10) zum Konfigurieren mit einer Konfigurier-Datenverarbeitungseinrichtung (14) gekoppelt wird und die Konfigurationsdaten über eine Eingabeschnittstelle (11; 13) der Konvertiereinrichtung (10) übermittelt werden.

4. Verfahren nach Anspruch 3, **dadurch gekennzeichnet, daß** beim Konfigurieren auf der Konfigurier-Datenverarbeitungseinrichtung (14) ein Konfigurierprogramm gearbeitet wird, von dem ein Benutzer mittels einer Anzeigeeinrichtung (16) der Konfigurier-Datenverarbeitungseinrichtung im Dialogbetrieb zur Eingabe und/oder Auswahl der zu erfassenden Primärnachrichten, der zu erzeugenden Sekundärnachrichten und der Parameter der Ausgabe der Sekundärnachrichten aufgefordert wird.

5. Verfahren nach einem der Ansprüche 1 bis 4, **dadurch gekennzeichnet, daß** die Standard-Schnittstelle (2) eine Schnittstelle zur Ankopplung eines Signalgebers ist, über welche als Ausgabesignalstrom den Signalgeber ansteuernde Signale ausgegeben werden, und daß die wenigstens eine Primärnachricht ein vom Signalgeber auszugebendes Meldungssignal ist.

6. Verfahren nach einem der Ansprüche 1 bis 5, **dadurch gekennzeichnet, daß** die Parameter der Ausgabe die Schnittstelle (41) zwischen der Konvertiereinrichtung (10) und dem Übertragungsmedium (42), die Art des Übertragungsmediums, eine Adresse der mit dem Übertragungsmedium gekoppelten Empfangseinrichtung (43) sowie Informationen darüber umfassen, ob und in welchen zeitlichen Abständen die wenigstens eine Sekundärnachricht wiederholt ausgegeben wird.

7. Verfahren nach einem der Ansprüche 1 bis 6, **dadurch gekennzeichnet,**
**daß** von der mit dem Übertragungsmedium (42) gekoppelten Empfangseinrichtung (43) nach Empfang der Sekundärnachricht eine den Empfang anzeigende Antwortnachricht auf das Übertragungsmedium ausgegeben wird, und
**daß** die Antwortnachricht von der Konvertiereinrichtung (10) empfangen und ausgewertet wird.

8. Konvertiereinrichtung (10) zum Empfangen eines von einer Standard-Schnittstelle (2) ausgegebenen Ausgabesignalstroms, zum selektiven Erfassen einer im Ausgabesignalstrom enthaltenen, ein Ereignis anzeigenden Primärnachricht und zum Erzeugen und Ausgeben einer das Ereignis anzeigenden Sekundärnachricht auf ein Übertragungsmedium (42), mit
einer Speichereinrichtung (20) zum Speichern von Konfigurationszuständen, die die zu erfassende Primärnachricht, die zu erzeugende und auszugebende Sekundärnachricht und Parameter der Ausgabe der Sekundärnachricht auf das Übertragungsmedium spezifizieren,
einer Eingabeschnittstelle (11, 13) zum Empfangen von Konfigurationsdaten in einem Konfigurationsmodus und zum Empfangen des Ausgabesignalstroms der Standard-Schnittstelle (2) in einem Betriebsmodus,
einer mit der Eingabeschnittstelle (11, 13) und der Speichereinrichtung (20) gekoppelten Steuereinrichtung (30) zum Umschalten zwischen dem Konfigurationsmodus und dem Becriebsmodus, zum Erzeugen der zu speichernden Konfigurationszustände aus den empfangenen Konfigurationsdaten im Konfigurationsmodus und zum selektiven Erfassen der Primärnachricht und zum Erzeugen der auszugebenden Sekundärnachricht in Abhängigkeit von der erfaßten Primärnachricht im Betriebsmodus, und
einer mit der Steuereinrichtung (30) und der Speichereinrichtung (20) gekoppelten und mit dem Übertragungsmedium (42) koppelbaren Ausgabeschnittstelleneinrichtung (40) zum Empfangen der Sekundärnachricht und zum Ausgeben der Sekundärnachricht in einer von den die Parameter der Ausgabe spezifizierenden Konfigurationszuständen vorgegebenen Weise auf das Übertragungsmedium (42).

9. Konvertiereinrichtung nach Anspruch 8, **dadurch gekennzeichnet, daß** die Eingabeschnittstelle eine erste Eingabeschnittstelle (13) zum Empfangen der Konfigurationsdaten und eine zweite Eingabeschnittstelle (11) zum Empfangen des Ausgabesignalstroms aufweist.

10. Konvertiereinrichtung nach einem der Ansprüche 8 bis 9, **dadurch gekennzeichnet, daß** die in der Speichereinrichtung (20) gespeicherten Konfigurationszustände die in einem Standard-Datenformat gespeicherten Konfigurationsdaten sind.

## Claims

1. Method for generating and transmitting at least one secondary message signalling an event, wherein
an output signal stream which contains at least one primary message signalling the event and provided for emission by way of a standard output device (3) is emitted on a standard interface (2), which is accessible from the exterior, of a data processing unit (1), and a standard output device (3) for output of the at least one primary message can be connected to the standard interface (2);
a conversion device (10) is configured for receiving the output signal stream, for the selective capture of the at least one primary message and for generating and emitting the at least one secondary message onto the transmission medium (42) by
putting the conversion device (10) into a configuration mode,
transmitting to the conversion device configuration data which specify the primary message to be captured, the secondary message to be generated and emitted and parameters for emitting the secondary message onto the transmission medium (42), and
configuration states corresponding to the configuration data are stored in the conversion device (10);
the conversion device (10) is connected to the standard interface (2) and is put into operating mode;
the output signal stream is received by the conversion device (10) and in a manner which is predetermined by the configuration states the primary message is selectively captured, the at least one secondary message is generated as a function of the at least one primary message and the at least one secondary message is emitted onto the transmission medium (42); and
the at least one secondary message is received by a receiving device (43) connected to the transmission medium.

2. Method as claimed in Claim 1, **characterised in that** for configuration the conversion device (10) is connected to the standard interface (2) and the configuration data are transmitted by the data processing unit (1).

3. Method as claimed in Claim 1, **characterised in that** the conversion device (10) is connected for configuration to a configuration data processing device (14) and the configuration data are transmitted by way of the input interface (11; 13) of the conversion device.

4. Method as claimed in Claim 3, **characterised in that** during configuration a configuration program is run on the configuration data processing unit (14) from which by means of a display device (16) of the configuration data processing unit in interactive mode a user is asked for input and/or selection of the primary messages to be captured, the secondary messages to be generated and the parameters for emitting the secondary messages.

5. Method as claimed in one of Claims 1 to 4, **characterised in that** the standard interface (2) is an interface for coupling of a signal generator by way of which signals which control the signal generator are emitted as output signal stream, and that the at least one primary message is a notification signal to be emitted by the signal generator.

6. Method as claimed in one of Claims 1 to 5, **characterised in that** the parameters for emission comprise the interface (41) between the conversion device (10) and the transmission medium (42), the type of transmission medium, an address of the receiving device (43) connected to the transmission medium as well as information as to whether and in which time intervals the at least one secondary message is emitted again.

7. Method as claimed in one of Claims 1 to 5, **characterised in that**
after receipt of the secondary message the receiving device (43) connected to the transmission medium (42) emits a response message to the transmission medium signalling the receipt, and
the response message from the conversion device (10) is received and evaluated.

8. Conversion device (10) for receiving an output signal stream emitted by a standard interface (2), for the selective capture of a primary message which signals an event and is contained in the output signal stream and for generating and emitting a secondary message signalling this event onto a transmission medium (42), with
a memory device (20) for storing configuration states which specify the primary message to be captured, the secondary message to be generated and emitted and parameters for emitting the secondary message onto the transmission medium,
an input interface (11, 13) for receiving configuration data in a configuration mode and for receiving the output signal stream of the standard interface (2) in an operating mode,
a control device (30) connected to the input interface (11, 13) and the memory device (20) for switching between the configuration mode and the operating mode, for generating the configuration states which are to be stored from the received configuration data in the configuration mode and for selective capture of the primary message and for generating the secondary message to be emitted as a function of the captured primary message in the operating mode, and
an output interface device (40) connected to the control device (30) and the memory device (20) and capable of being connected to the transmission medium (42) for receiving the secondary message and for emitting the secondary message onto the transmission medium (42) in a manner which is predetermined by the configuration states which specify the parameters for emission.

9. Conversion device as claimed in Claim 8, **characterised in that** the input interface has a first input interface (13) for receiving the configuration data and a second input interface (11) for receiving the output signal stream.

10. Conversion device as claimed in one of Claims 8 to 9, **characterised in that** the configuration states stored in the memory device (20) are the configuration data stored in a standard data format.

## Revendications

1. Procédé pour la génération et la transmission d'au moins un message secondaire indiquant un événement, un courant de signal d'émission contenant au moins un message primaire indiquant l'événement et prévu pour l'émission au moyen d'un dispositif d'émission standard (3), est émis sur une interface standard (2) accessible par l'extérieur d'un dispositif de traitement de données (1), le dispositif d'émission standard (3) pouvant être couplé à l'interface standard (2) pour l'émission du messageprimaire ;
un dispositif de conversion (10) pour la réception du courant de signal d'émission, pour l'enregistrement sélectif du messageprimaire et pour la génération et l'émission du messagesecondaire sur un support de transmission (42), du fait que le dispositif de conversion (10) est amené dans un mode de configuration, des données de configuration sont transmises au dispositif de conversion, lesquelles données spécifient le message primaire à enregistrer, le message secondaire à générer et à émettre et des paramètres de l'émission du message secondaire sur le support de transmission (42), et
des états de configuration appropriés aux données de configuration sont mémorisés dans le dispositif de conversion (10) ;
le dispositif de conversion (10) est couplé à l'interface standard (2) et amené dans un mode d'exploitation ;
le courant de signal d'émission est reçu par le dispositif de conversion (10) et le au moins un message primaire est enregistré sélectivement dans une façon prédéfinie par les états de configuration, le au moins un message secondaire est généré en fonction du messageprimaire et le au moins un message secondaire est émis sur le support de transmission (42) ; et
au moins un message secondaire est reçu par un dispositif de réception (43) couplé avec le support de transmission.

2. Procédé selon la revendication 1, **caractérisé en ce que**, pour la configuration, le dispositif de conversion (10) est couplé avec l'interface standard (2) et les données de configuration sont transmises par le dispositif de traitement de données (1).

3. Procédé selon la revendication 1, **caractérisé en ce que** le dispositif de conversion (10) est couplé pour la configuration avec un dispositif de traitement de données de configuration (14) et les données de configuration sont transmises au dispositif de conversion (10) au moyen d'une interface d'entrée (11, 13).

4. Procédé selon la revendication 3, **caractérisé en ce que**, pour la configuration sur le dispositif de traitement de données de configuration, on travaille à un programme de configuration (14), par lequel un utilisateur est invité au moyen d'un dispositif d'affichage (16) de dispositif de traitement de données de configuration, en mode de dialogue, à entrer et/ou sélectionner les messages primaires à enregistrer, les messages secondaires à générer et les paramètres de l'émission des messages secondaires.

5. Procédé selon l'une quelconque des revendications 1 à 4, **caractérisé en ce que** l'interface standard (2) est une interface pour le couplage d'un générateur de signaux, par laquelle des signaux déclenchant le générateur de signaux sont émis sous la forme d'un courant de signal d'émission et **en ce que** le au moins un message primaire est un signal de message à émettre par le générateur de signaux.

6. Procédé selon l'une quelconque des revendications 1 à 5, **caractérisé en ce que** les paramètres de l'émission comprennent l'interface (41) entre le dispositif de conversion (10) et le support de transmission (42), la nature du support de transmission, une adresse du dispositif de réception (43) couplé au support de transmission et des informations destinées à savoir si et à quels intervalles dans le temps le au moins un message secondaire est émis de façon répétée.

7. Procédé selon l'une quelconque des revendications 1 à 6, **caractérisé en ce qu'**un message de réponse indiquant la réception est envoyé au support de transmission (42) par le dispositif de réception (43) couplé avec le support de transmission (42) après la réception du message secondaire, et **en ce que** le message de réponse est reçu et analysé par le dispositif de conversion (10).

8. Dispositif de conversion (10) pour la réception d'un courant de signal d'émission émis par une interface standard (2), pour l'enregistrement sélectif d'un message primaire indiquant un événement et contenu dans le courant de signal d'émission et pour la génération et l'émission d'un message secondaire indiquant l'événement sur un support de transmission (42), avec
un dispositif de mémorisation (20) pour la mémorisation d'états de configuration, qui spécifient le message primaire à enregistrer, le message secondaire à générer et à émettre et des paramètres de l'émission du message secondaire sur le support de transmission,
une interface d'entrée (11, 13) pour la réception de données de configuration dans un mode de configuration et pour la réception du courant de signal d'émission de l'interface standard (2) dans un mode d'exploitation, un dispositif de commande (30) couplé avec l'interface d'entrée (11, 13) et le dispositif de mémorisation (20) pour la commutation entre le mode de configuration et le mode de service, pour la génération des états de configuration à mémoriser à partir des données de configuration reçues dans le mode de configuration et pour l'enregistrement sélectif du message primaire et pour la génération du message secondaire à émettre en fonction du message primaire enregistré dans le mode de service, et
un dispositif d'interface d'émission (40) couplé avec le dispositif de commande (30) et le dispositif de mémorisation (20) et pouvant être couplé avec le support de transmission (42) pour la réception du message secondaire et pour l'émission du message secondaire dans une façon prédéfinie par les états de configuration spécifiant les paramètres de l'émission sur le support de transmission (42).

9. Dispositif de conversion selon la revendication 8, **caractérisé en ce que** l'interface d'entrée présente une première interface d'entrée (13) pour la réception des données de configuration et une deuxième interface d'entrée (11) pour la réception du courant de signal d'émission.

10. Dispositif de conversion selon l'une quelconque des revendications 8 à 9, **caractérisé en ce que** les états de configuration mémorisés dans le dispositif de mémorisation (20) sont les données de configuration mémorisées dans un format de données standard.
